# EUROPEAN PATENT APPLICATION

(11) **EP 1 270 386 A1**
(43) Date of publication of application: **02.01.2003**
(21) Application number: 02011433.6
(22) Date of filing: 24.05.2002
(51) Int. Cl.: B62D 65/00, B62D 25/06

(54) **Car roof panel provided with fixed glass**

(30) Priority: 22.06.2001 IT TO20010103
(71) Applicant: FIAT AUTO S.p.A., 10135 Torino (IT)
(72) Inventor: Castello, Carlo, 10135 Torino (IT)
(74) Representative: Di Francesco, Gianni

(57) **Abstract**

Car roof panel provided with A glass or crystal (12) which presents a rectangular profile and is placed into an opening (4) the rectangular profile of which is congruous with the profile of the crystal, the way the opening is located at the roof panel (1) being such that its longer axis is basically coincident with the longer axis of the roof panel (1).

## Description

The present invention refers to the non openable glass roof panel of a motor vehicle.

Car roof panels provided with mobile or non mobile glasses are already known to the art. More in particular among the so called openable roof panels are those consisting mainly of a glass sheet connected to a mechanism adapted to open or close it in relationship to the remaining part of the roof panel.

However, an openable car roof panel can increase costs and cause both a general weakening of the roof panel and a reduction in the vertical space inside the passenger compartment, due to the presence of the opening mechanism.

It is an object of the present invention to provide a roof panel provided with a crystal sheet that allows to let the passenger compartment be brighter than it is in the case there is an openable roof panel, that makes the roof panel more rigid and therefore more resistant to load, i.e. in case of snow, being at the same time not expensive and of minimum dimension.

Said objects are achieved by means of a roof panel for motor vehicles provided with crystal, presenting the characteristics set forth in claim 1.

Additional characteristics and advantages will become clear from the following description, referring to the appended drawings, provided as non restrictive example, and in which:

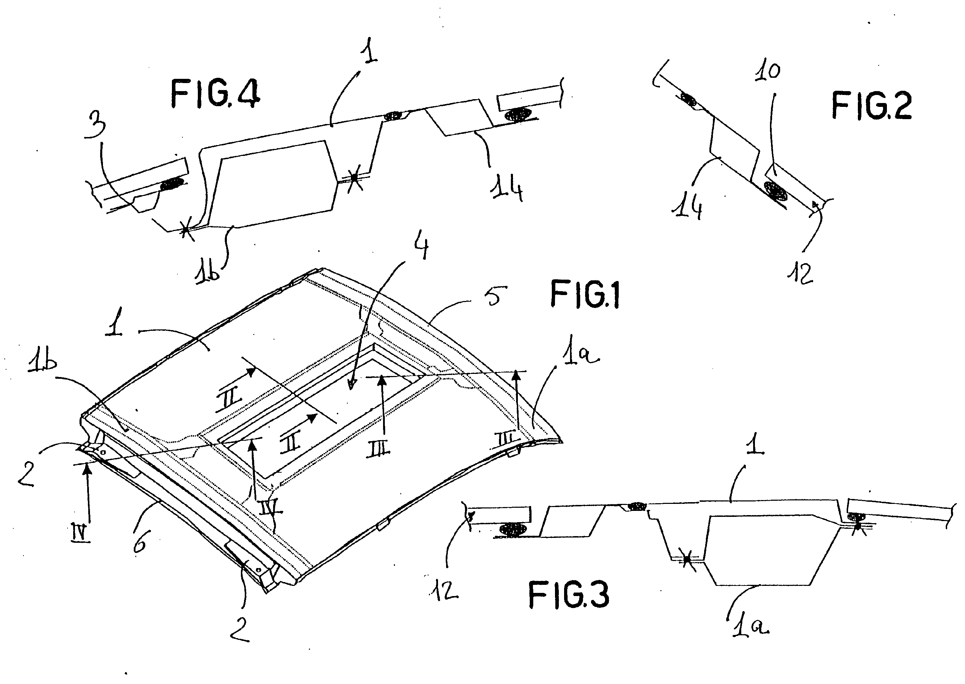

- figure 1 is a perspective top view of a roof panel of a motor vehicle according to the invention, provided with a fixed glass;
- figure 2 is a section view along the line II-II in figure 1;
- figure 3 is a section view along the line III-III in figure 1, and
- figure 4 is a section view along the line IV-IV in figure 1.

With reference to the figures, reference number 1 indicates the roof panel of a motor vehicle, provided with front and rear crosspieces 1a and 1b, the rear edge of which being provided with supports 2 adapted to engage the hatchback 3 (partly shown).

In the middle of the roof panel 1 there is an opening 4 of rectangular shape, the longer axis of which is basically coincident with the longer axis of the roof panel, and the shorter sides of which are equidistant from the front and rear edges 5 and 6 of said roof panel. The length of the space 4 is such that it covers more than half the length of the roof panel 1. The edge of the opening 4 presents a lowered profile so that it is possible to place and glue, by means of a proper bounding agent 8, the edge 10 of a crystal or glass 12, the profile of which is adapted to be inserted into the opening 4. The way the edge of the opening 4 is lowered will be such that the crystal 12 is completely housed inside the opening, so that its external surface is exactly at the same level as the surface of the roof panel 1. Besides, the opening 4 is surrounded at its lower part by a frame 14 that supports the crystal and makes the whole roof panel more resistant.

In addition, the longitudinal location of the opening with its relative crystal, increases brightness also in the rear part of the passenger compartment so that the motor vehicle provided with the object of the present invention looks wider than an identical motor vehicle where the object of this invention is not implemented.

## Claims

1. Car roof panel provided with glass or crystal, **characterised in that** said glass of crystal (12) presents a rectangular profile and is placed into an opening (4) the rectangular profile of which is congruous with the profile of the crystal, the way the opening is located at the roof panel (1) being such that its longer axis is basically coincident with the longer axis of the roof panel (1).

2. Car roof panel as claimed in claim 1, **characterised in that** the opening (4) is surrounded at its lower part by a support frame (14).

3. Car roof panel as claimed in claim 1, **characterised in that** the edge of the opening (4) presents a lowered profile so that it houses the whole thickness of the crystal (12).

4. Car roof panel as claimed in claim 1, **characterised in that** the edge (10) of the crystal (12) is fixed to the edge of the opening (4) by means of a bonding agent.

5. Car roof panel as claimed in claim 1, **characterised in that** the length of the opening (4) is more than half the length of the roof panel.
